# EUROPEAN PATENT APPLICATION

(11) **EP 4 175 109 A1**
(43) Date of publication of application: **03.05.2023**
(21) Application number: 21832569.4
(22) Date of filing: 25.06.2021
(51) Int. Cl.: H02J 7/00, H02J 1/00, H02J 3/32, H02M 3/00

(54) **POWER CONVERTER, METHOD FOR CONTROLLING POWER CONVERTER, POWER SYSTEM, METHOD FOR CONTROLLING POWER SYSTEM, AND PROGRAM**

(30) Priority: 30.06.2020 JP 2020112457; 30.10.2020 JP 2020183016
(71) Applicant: FURUKAWA ELECTRIC CO., LTD., Chiyoda-ku Tokyo 100-8322 (JP)
(72) Inventor: RIKISO, Masahiro, Tokyo 100-8322 (JP); ABE, Asuka, Tokyo 100-8322 (JP)
(74) Representative: SSM Sandmair
(86) International application number: PCT/JP2021/024244
(87) International publication number: WO 2022/004615

(57) **Abstract**

An electric power converter is electrically connected to an electric storage device. The electric power converter includes a control unit that, according to the voltage measured by the electric power converter, refers to, as the output target for the electric storage device, a reference function which has a drooping characteristic and which represents a control target function. The reference function has a constant-input-output region over a predetermined voltage range, and is updated based on the battery status of the electric storage device.

## Description

### Field

The present invention relates to: an electric power converter that is electrically connected to a commercial power system of the alternating current type, that is electrically connected to a stationary-type electric storage device capable of receiving the supply of electric power from the commercial power system, that controls the input and the output of the stationary-type electric storage device in such a way that a reference function having a drooping characteristic is followed according to the voltage and the electric current measured by the electric power converter, and that updates the reference function having the drooping characteristic according to the changes occurring in the charging rate of the stationary-type electric storage device; and relates to an electric power system that includes the electric power converter.

### Background

In recent years, as a substitute for a large-scale electric power network that is dependent on fossil energy or nuclear energy, attention has been focused on an electric power network in which the locally produced electric power is locally consumed. An electric power network in which the locally produced electric power is locally consumed has a wide variety of devices connected thereto, such as: power generation devices such as photovoltaic (PV) devices for generating electricity using reproducible energy; stationary-type electric storage devices; and electric-powered vehicles (EV). Since each such device is a direct-current power source, a study is being conducted about building an electric power network using the direct current (DC) (i.e., building a DC grid).

Typically, as a control method for controlling a DC grid, an electric power converter that is connected to a stationary-type electric storage device performs constant-current control or constant-voltage control of the stationary-type electric storage device based on an instruction from a central control unit, and thus performs centralized control of the electrical energy of the DC bus of the DC grid. Although such a centralized control method enables easy control of the entire DC grid, it is difficult to smoothly deal with a sudden fluctuation in the demand for electric power.

In that regard, a reference function is assigned to the stationary-type electric storage device on the basis of the electric power (P) and the voltage (V) of that device; and drooping control is also performed in which the reference function has a drooping characteristic for applying the drooping characteristic to the target voltage value of the stationary-type electric storage device according to the electric energy required by the DC bus. When the stationary-type electric storage device is controlled in an autonomous decentralized manner during the drooping control, the input-output amount of the stationary-type electric storage device can be optimally adjusted according to the electric energy required by the DC bus, so that the voltage of the DC bus can be stabilized.

In the conventional drooping control of a stationary-type electric storage device, in order to stabilize the charging state of the stationary-type electric storage device while stabilizing the voltage of the DC bus, the reference function is updated according to the changes in the charging rate of the stationary-type electric storage device, so that the intercept of the reference function having the drooping characteristic (i.e., the voltage (V) of the entire grid) is shifted toward the high-voltage side or the low-voltage side. As a reference function that is updated in the manner explained above, for example, a reference function can be cited that is provided with a constant-input-output region in which the target input-output of an electric storage device is maintained at "0" over a predetermined voltage range (refer to Patent Literature 1).

Moreover, as a reference function that is updated in the manner explained above, in order to assign an agile charging-discharging characteristic to an electric storage device, a reference function can be cited that is not provided with a constant-input-output region in which the input-output of the electric storage device is equal to "0" (refer to Patent Literature 2).

### Citation List

### Patent Literature

[Patent Literature 1] International Laid-open Pamphlet No. 2019/103059
[Patent Literature 2] Japanese Patent No. 6371603 Summary

### Technical Problem

In Patent Literature 1, since the reference function is provided with the constant-input-output region in which the input-output is equal to "0", when the DC grid is performing steady operation, the electricity supply for the DC grid can be covered by the electric power supplied from an external commercial power system or a photovoltaic device (PV) without performing any charging or discharging of the electric storage device. That enables achieving enhancement in the power efficiency of the entire DC grid. However, in Patent Literature 1, even if the charging rate of the electric storage device is low, the operation thereof remains confined to the constant-input-output region of the reference function in which the input-output of the electric storage device is maintained at "0".
Hence, there are times when the electric storage device cannot maintain the charged state at an adequate level. If the electric storage device cannot maintain the charged state at an adequate level, it cannot be utilized as an adjustment force against a sudden fluctuation in the demand for electric power from the DC grid. Meanwhile, regarding the reference function disclosed in Patent Literature 2, since the electric storage device is performing charging and discharging on a constant basis, the power loss attributed to charging and discharging goes up, thereby resulting in a decline in the power efficiency of the DC grid.

In view of the issues explained above, it is an objective to provide an electric power converter that performs input-output control according to the battery status of the electric storage device, such as narrows down the output of the electric storage device when the electric power stored therein is small in amount, and that becomes able to assign an excellent adjustment force against a sudden fluctuation in the demand for electric power and to assign excellent power efficiency; as well as to provide an electric power system that includes the electric power converter, to provide a control method for the electric power converter, to provide a control method for the electric power system, and to provide programs.

### Solution to Problem

The gist of the configuration according to the present invention is as follows.
(1) An electric power converter for being electrically connected to an electric storage device, wherein
   the electric power converter is configured to refer to, according to voltage measured by the electric power converter, a reference function as output target for the electric storage device, the reference function having drooping characteristic and representing a control target function,
   the reference function has a constant-input-output region over a predetermined voltage range, and
   the reference function is updated based on battery status of the electric storage device.
(2) The electric power converter according to (1), wherein
   the electric storage device is a stationary-type electric storage device,
   a control unit of the electric power converter is configured to perform control based on the reference function for generating target value at time of performing local-control of the stationary-type electric storage device according to the voltage measured by the electric power converter,
   the reference function has a constant-input-output region in which input-output of the stationary-type electric storage device is maintained at a constant value over a predetermined voltage range, and
   the reference function having the constant-input-output region is updated based on battery status of the stationary-type electric storage device.
(3) The electric power converter according to (1) or (2), wherein change in battery status of the electric storage device represents change in charging rate, or change in deterioration state, or change in C rating.
(4) The electric storage device according to (3), wherein input-output in the constant-input-output region is equal to 0 when charging rate of the electric storage device is a first charging rate,.
(5) The electric power converter according to (4), wherein the reference function having drooping characteristic is updated such that
   when charging rate of the electric storage device drops to be equal to or lower than a second charging rate that is lower than the first charging rate, the constant-input-output region shifts toward input region in which charging current is supplied to the electric storage device, and
   when charging rate of the electric storage device increases to be equal to or higher than a third charging rate that is higher than the first charging rate, the constant-input-output region shifts toward output region in which the electric storage device is discharged.
(6) The electric power converter according to (5), wherein the reference function having drooping characteristic is updated such that
   when charging rate of the electric storage device increases from the first charging rate to a predetermined charging rate exceeding the second charging rate, voltage value of upper limit of the predetermined voltage range over which input-output within the constant-input-output region is equal to 0 shifts toward low-voltage side, and
   when charging rate of the electric storage device drops from the first charging rate to a predetermined charging rate lower than the third charging rate, voltage value of lower limit of the predetermined voltage range over which input-output within the constant-input-output region is equal to 0 shifts toward high-voltage side.
(7) The electric power converter according to (6), wherein the reference function having drooping characteristic is updated such that
   when charging rate of the electric storage device drops from the first charging rate to a predetermined charging rate exceeding the second charging rate, voltage value of lower limit of the predetermined voltage range over which input-output within the constant-input-output region is equal to 0 is not changed, and
   when charging rate of the electric storage device increases from the first charging rate to a predetermined charging rate lower than the third charging rate, voltage value of upper limit of the predetermined voltage range over which input-output within the constant-input-output region is equal to 0 is not changed.
(8) The electric power converter according to any one of (1) to (7), wherein secondary control, which is meant for updating a reference function having drooping characteristic, is performed based on a command issued by a central control unit.
(9) The electric power converter according to (8), wherein a control unit of the electric power converter performs control, which is based on the reference function, based on local voltage of the electric storage device and without involving a command from the central control unit.
(10) The electric power converter according to (8) or (9), wherein control cycle of the secondary control is longer than control cycle of control that is based on the reference function.
(11) The electric power converter according to any one of (1) to (10), wherein the reference function having drooping characteristic is configured to vary input-output amount of electric power or electric current according to variation in voltage.
(12) The electric power converter according to any one of (1) to (11), wherein the electric power converter is a DC/DC converter.
(13) An electric power system including
   an electric power element including:
      an electric power converter; and
      a stationary-type electric storage device electrically connected to the electric power converter, wherein
   the electric power converter is configured to refer to, according to voltage measured by the electric power converter, a reference function as output target for the electric storage device, the reference function having drooping characteristic and representing a control target function,
   the reference function has a constant-input-output region over a predetermined voltage range, and
   the reference function is updated based on battery status of the electric storage device.
(14) The electric power system according to (13), wherein
   the electric storage device is a stationary-type electric storage device,
   the electric power converter includes a control unit configured to perform control based on the reference function for generating target value at time of performing local-control of the stationary-type electric storage device according to the voltage measured by the electric power converter,
   the reference function has a constant-input-output region in which input-output of the stationary-type electric storage device is maintained at a constant value over a predetermined voltage range, and
   the reference function having the constant-input-output region is updated based on battery status of the stationary-type electric storage device.
(15) The electric power system according to (13) or (14), wherein change in battery status of the electric storage device represents change in charging rate, or change in deterioration state, or change in C rating.
(16) The electric power system according to (15), wherein input-output in the constant-input-output region is equal to 0 when charging rate of the electric storage device is a first charging rate.
(17) The electric power system according to (16), wherein the reference function having drooping characteristic is updated such that
   when charging rate of the electric storage device drops to be equal to or lower than a second charging rate that is lower than the first charging rate, the constant-input-output region shifts toward input region in which charging current is supplied to the electric storage device, and
   when charging rate of the electric storage device increases to be equal to or higher than a third charging rate that is higher than the first charging rate, the constant-input-output region shifts toward output region in which the electric storage device is discharged.
(18) The electric power system according to (17), wherein the reference function having drooping characteristic is updated such that
   when charging rate of the electric storage device increases from the first charging rate to a predetermined charging rate exceeding the second charging rate, voltage value of upper limit of the predetermined voltage range over which input-output within the constant-input-output region is equal to 0 shifts toward low-voltage side, and
   when charging rate of the electric storage device drops from the first charging rate to a predetermined charging rate lower than the third charging rate, voltage value of lower limit of the predetermined voltage range over which input-output within the constant-input-output region is equal to 0 shifts toward high-voltage side.
(19) The electric power system according to (18), wherein the reference function having drooping characteristic is updated such that
   when charging rate of the electric storage device drops from the first charging rate to a predetermined charging rate exceeding the second charging rate, voltage value of lower limit of the predetermined voltage range over which input-output within the constant-input-output region is equal to 0 is not changed, and
   when charging rate of the electric storage device increases from the first charging rate to a predetermined charging rate lower than the third charging rate, voltage value of upper limit of the predetermined voltage range over which input-output within the constant-input-output region is equal to 0 is not changed.
(20) The electric power system according to any one of (13) to (19), further including a central control unit that controls the electric power converter, wherein
   secondary control, which is meant for updating a reference function having drooping characteristic, is performed based on a command issued by the central control unit.
(21) The electric power system according to (20), wherein the control unit performs control, which is based on the reference function, based on local voltage of the electric storage device and without involving a command from the central control unit.
(22) The electric power system according to (20) or (21), wherein control cycle of the secondary control is longer than control cycle of control that is based on the reference function.
(23) The electric power system according to any one of (13) to (22), wherein the reference function having drooping characteristic is configured to vary input-output amount of electric power or electric current according to variation in voltage.
(24) The electric power system according to any one of (13) to (23), wherein line to which the electric power element is electrically connected is a DC bus.
(25) A control method for an electric power converter electrically connected to an electric storage device, the control method including:
   a step of referring to, according to voltage measured by the electric power converter, a reference function as output target for the electric storage device by the electric power converter, the reference function having drooping characteristic and representing a control target function;
   a step of updating the reference function based on battery status of the electric storage device, wherein
   the reference function has a constant-input-output region over a predetermined voltage range.
(26) A control method for an electric power system that includes an electric power element including an electric power converter, and a stationary-type electric storage device for being electrically connected to the electric power converter, the control method including:
   a step of referring to, according to voltage measured by the electric power converter, a reference function as output target for the electric storage device by the electric power converter, the reference function having drooping characteristic and representing a control target function;
   a step of updating the reference function based on battery status of the electric storage device, wherein
   the reference function has a constant-input-output region over a predetermined voltage range.
(27) A control method for an electric power system including: an electric power element including an electric power converter, and a stationary-type electric storage device electrically connected to the electric power converter; and a central control device configured to communicate with the electric power converter and with an external server holding demand information about electric power, the control method including:
   a step of referring to, according to voltage measured by the electric power converter, a reference function as output target for the electric storage device by the electric power converter, the reference function having drooping characteristic and representing a control target function;
   a step of obtaining the demand information from the external server; and
   a step of updating the reference function based on battery status of the electric storage device, wherein
   the reference function has a constant-input-output region over a predetermined voltage range.
(28) A program that causes a processor to execute a control method for an electric power converter electrically connected to an electric storage device, the program instructing the processor to:
   refer to a reference function having drooping characteristic and representing a control target function;
   update the reference function based on battery status of the electric storage device, wherein
   the reference function has a constant-input-output region over a predetermined voltage range.
(29) A program that causes a processor to execute a control method for an electric power system including an electric power element including an electric power converter, and a stationary-type electric storage device electrically connected to the electric power converter, the program instructing the processor to execute:
   refer to, according to voltage measured by the electric power converter, a reference function as output target for the electric storage device by the electric power converter, the reference function having drooping characteristic and representing a control target function;
   update the reference function based on battery status of the electric storage device, wherein
   the reference function has a constant-input-output region over a predetermined voltage range.

### Advantageous Effects of Invention

According to an aspect of an electric power converter and an electric power system including the electric power converter according to the present invention, a function for drooping control is provided that is based on a reference function which has a drooping characteristic for generating the target value at the time of performing, what is called, local-control meant for controlling an electric storage device according to the voltage measured by the electric power converter. The reference function having the drooping characteristic has a constant-input-output region in which the target input-output of the electric storage device is maintained at a constant value over a predetermined voltage range. The reference function having the drooping characteristic and having the constant-input-output region is updated based on the variation in the battery status of the electric storage device. As a result, the input-output control is performed according to the battery status of the electric storage device, such as by narrowing down the output of the electric storage device when the electric power stored therein is small in amount. Hence, the charging efficiency of the electric power system can be further enhanced while assigning the electric storage device with an excellent adjustment force against a sudden fluctuation in the demand for electric power.

According to an aspect of the electric power converter and the electric power system including the electric power converter according to the present invention, the reference function having the drooping characteristic is updated in such a way that, when the charging rate of the electric storage device drops to be equal to or lower than a second charging rate that is lower than a first charging rate at which the input-output in the constant-input-output region is equal to "0", the constant-input-output region shifts toward the input region in which the charging current is supplied to the electric storage device. Moreover, the reference function having the drooping characteristic is updated in such a way that, when the charging rate of the electric storage device increases to be equal to or higher than a third charging rate that is higher than the first charging rate, the constant-input-output region shifts toward the output region in which the electric storage device is discharged. As a result, the charging rate of the electric storage device can be stably maintained within a reasonable range. Hence, the electric storage device can be more reliably assigned with an excellent adjustment force against a sudden fluctuation in the demand for electric power.

According to an aspect of the electric power converter and the electric power system including the electric power converter according to the present invention, the reference function having the drooping characteristic is updated in such a way that, when the charging rate of the electric storage device drops from the first charging rate to a predetermined charging rate exceeding the second charging rate, the voltage value at the upper limit of a predetermined voltage range having the input-output to be equal to "0" within the constant-input-output region shifts toward the low-voltage side. On the other hand, the reference function having the drooping characteristic is updated in such a way that, when the charging rate of the electric storage device increases from the first charging rate to a predetermined charging rate lower than the third charging rate, the voltage value at the lower limit of the predetermined voltage range having the input-output to be equal to "0" within the constant-input-output region shifts toward the high-voltage side. As a result, the charging rate of the electric storage device can be maintained within a reasonable range while making use of the electric power supplied from a commercial power system installed on the outside. Hence, the power efficiency of the electric power system can be further enhanced while more reliably assigning the electric storage device with an excellent adjustment force against a sudden fluctuation in the demand for electric power.

According to an aspect of the electric power converter and the electric power system including the electric power converter according to the present invention, secondary control that is meant for updating the reference function having the drooping characteristic is performed based on a command issued by a central control unit. On the other hand, drooping control that is based on the reference function is performed based on the voltage of the electric storage device without involving a command from the central control unit. As a result, the time-varying required electric power of an entire electric power network, which includes the electric storage device, can be accurately reflected in the input-output control of the electric storage device. Thus, the control of the entire electric power network, which includes the electric storage device, gets optimized; and the required electric power can be efficiently supplied to the entire electric power network.

According to an aspect of a control method for the electric power converter, a control method for the electric power system, and programs according to the present invention, the charging efficiency of the electric power system can be enhanced while assigning the electric storage device with an excellent adjustment force against a sudden fluctuation in the demand for electric power.

### Brief Description of Drawings

FIG. 1 is an explanatory diagram illustrating the overview of an entire electric power network that constitutes an electric power system, which includes electric power converters, according to an embodiment of the present invention.
FIG. 2 is an explanatory diagram of a reference function that has a drooping characteristic and that is assigned to the devices used in the electric power network constituting the electric power system, which includes the electric power converters, according to the embodiment of the present invention.
FIG. 3 is an explanatory diagram for explaining the updating of the reference function assigned to the devices used in the electric power system, which includes the electric power converters, according to the embodiment of the present invention.
FIG. 4 is a diagram illustrating an example of updating the reference function that has a drooping characteristic and that is assigned to a stationary-type electric storage device used in the electric power system including the electric power converters according to the embodiment of the present invention.
FIG. 5 is a sequence diagram illustrating an example of a control method for the electric power system. Description of Embodiments

### <Embodiment>

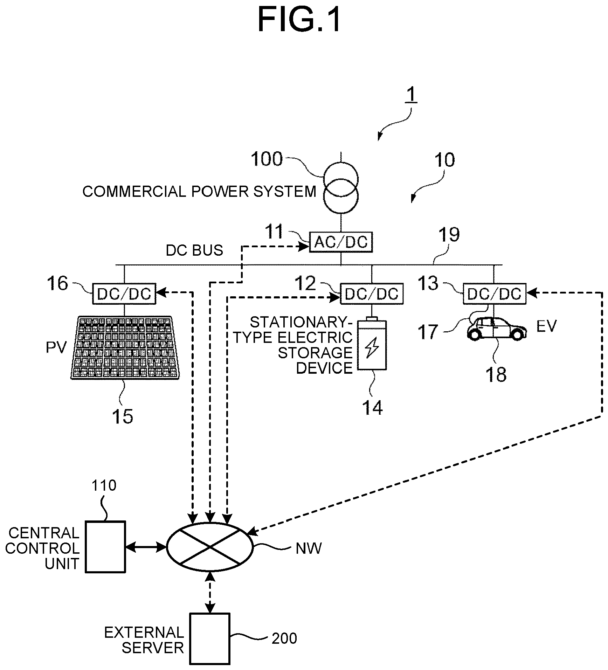

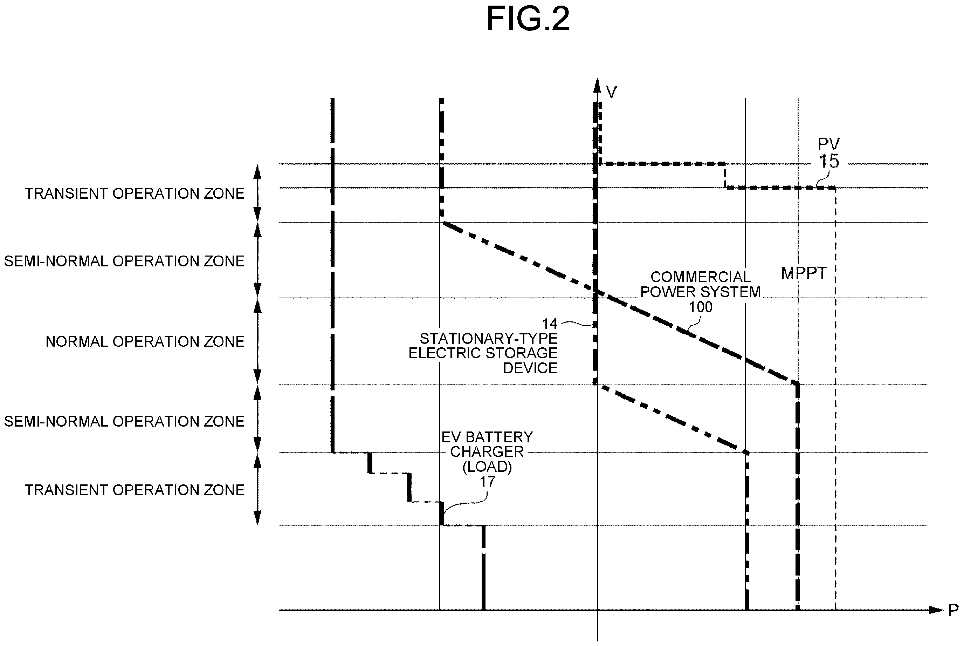

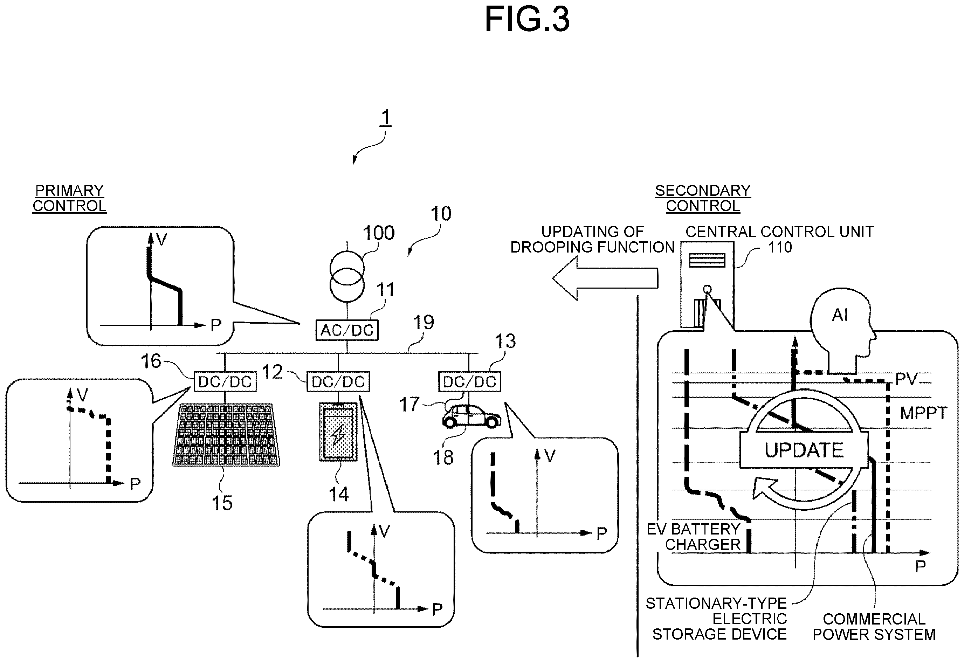

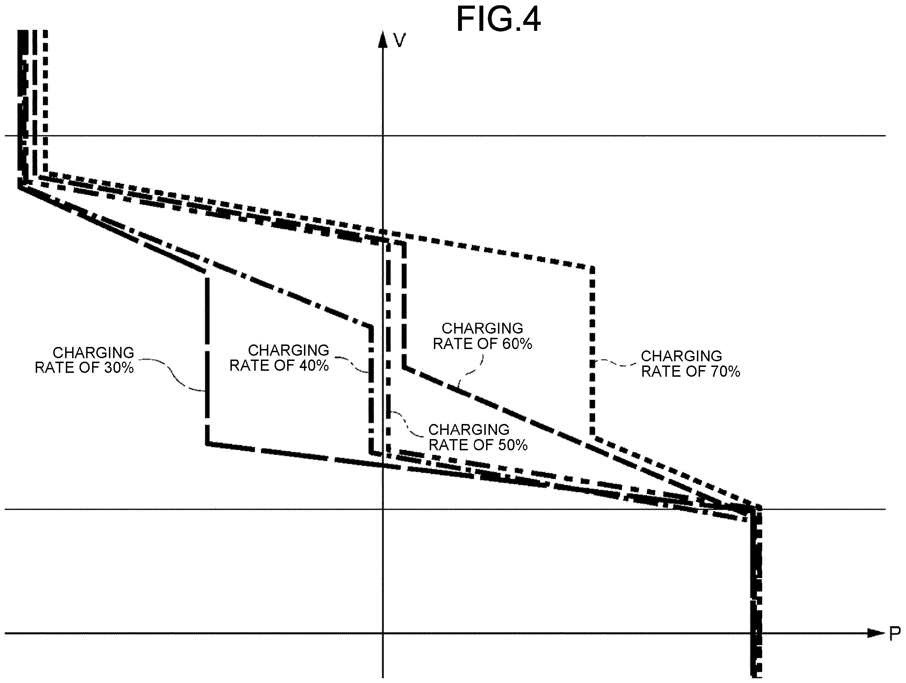

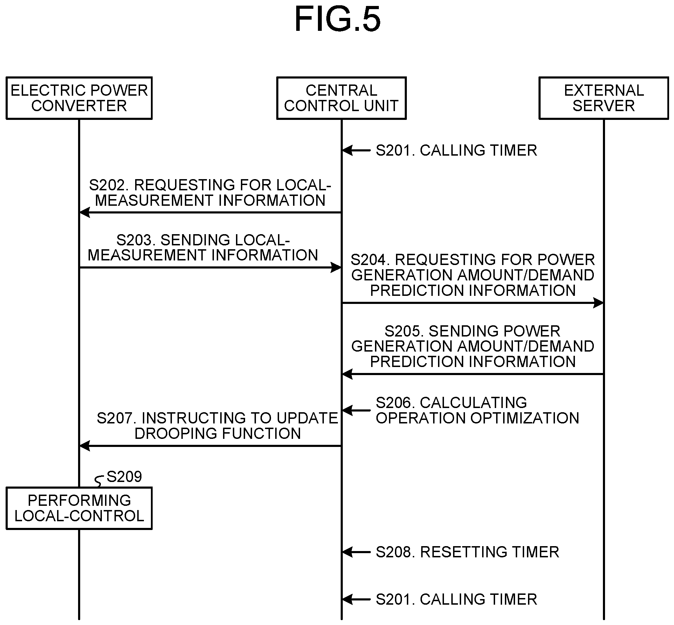

An exemplary embodiment of an electric power system that includes electric power converters according to the present invention is described below. FIG. 1 is an explanatory diagram illustrating the overview of an entire electric power network that constitutes the electric power system, which includes the electric power converters, according to the embodiment of the present invention. FIG. 2 is an explanatory diagram of a reference function that has a drooping characteristic and that is assigned to the devices used in the electric power network constituting the electric power system, which includes the electric power converters, according to the embodiment of the present invention. FIG. 3 is an explanatory diagram for explaining the updating of the reference function assigned to the devices used in the electric power system, which includes the electric power converters, according to the embodiment of the present invention. FIG. 4 is a diagram illustrating an example of updating the reference function that has a drooping characteristic and that is assigned to a stationary-type electric storage device used in the electric power system including the electric power converters according to the embodiment of the present invention. FIG. 5 is a sequence diagram illustrating an example of the control method for the electric power system.

As illustrated in FIG. 1, in an electric power system 1 that includes electric power converters according to the embodiment of the present invention, a bidirectional DC/DC converter 12 is included as an electric power converter that is electrically connected to a commercial power system 100 of the alternating current type and that is electrically connected to an electric storage device (in the electric power system 1, for example, a stationary-type electric storage device 14) capable of receiving the supply of electric power from the commercial power system 100 of the alternating type. More particularly, the electric power system 1 includes: an AC/DC converter 11 that is connectible to the commercial power system 100 of the alternating current type, that converts the alternating-current power input from the commercial power system 100 of the alternating current type into the direct-current power, and that outputs the direct-current power; a DC bus 19 that is connected to the output of the AC/DC converter 11; a first DC/DC converter 13 that is connected to the DC bus 19, that converts the direct-current power input from the DC bus 19 into the charging voltage meant for charging a storage battery to be charged, and that outputs the charging voltage; a battery charger (in an electric power network 10, an EV battery charger 17) that is connected to the first DC/DC converter 13 and that is connectible to a storage battery to be charged; the bidirectional DC/DC converter 12 that is connected to the DC bus 19, that converts the direct-current power input from the DC bus 19 into the charging voltage meant for charging the stationary-type electric storage device 14, and that outputs the charging voltage; and a photovoltaic device (PV) 15 that is connected to the DC bus 19 via a second DC/DC converter 16 and that is a power generation device for generating electricity using reproducible energy.

Thus, according to the explanation given above, the electric power network 10 represents a DC grid. In the electric power network 10, examples of a storage battery implies include an in-vehicle storage battery that is installed in an electric-powered vehicle (EV) 18 representing a load. The output of the DC bus 19 is connected to the EV battery charger 17, and the in-vehicle storage battery of the electric-powered vehicle 18 is connected to the EV battery charger 17 for the charging purpose. The stationary-type electric storage device 14 represents the in-facility electric storage device of the electric power network 10.

As an example, each electric power converter includes an electric power converting unit, a sensor, a control unit, and a communication unit.

The electric power converting unit is equipped with an electric power conversion function for performing AC/DC conversion or DC/DC conversion in the corresponding electric power converter; and is configured using, for example, an electric circuit that includes a coil, a capacitor, a diode, and a switching element. The switching element is, for example, a field-effect capacitor or an insulated gate bipolar transistor. The electric power conversion characteristic of the electric power converting unit can be controlled according to, for example, PWM (Pulse Width Modulation) control.

The sensor is used to measure the electrical characteristic values of the corresponding electric power converter, such as the current value, the voltage value, and the power value. Then, the sensor outputs the measured values to the control unit.

In the electric power system 1 including the electric power network 10, the amount of electric power received from the commercial power system 100 is controlled by the control units. Moreover, the control units also control the charging and discharging of the stationary-type electric storage device 14, the discharging of the photovoltaic device 15, and the charging of the in-vehicle storage battery of the electric-powered vehicle 18 that is connected to the EV battery charger 17.

Each control unit is configured using a processor, which enables a variety of arithmetic processing for controlling the electric power conversion function, and a memory unit. Examples of the processor include a CPU (Central Processing Unit), an ASIC (Application Specific Integrated Circuit), an FPGA (Field-Programmable Gate Array), a DSP (Digital Signal Processor), and a GPU (Graphics Processing Unit). The memory unit includes, for example, a ROM (Read Only Memory) that is used to store various programs and data to be used by the processor to perform arithmetic processing. Moreover, the memory unit includes, for example, a RAM (Random Access Memory) that is used as the work space by the processor at the time of performing arithmetic processing and that is used to store the result of the arithmetic processing performed by the processor. The memory unit can also include an auxiliary memory device such as an HDD (Hard Disk Drive) or an SSD (Solid State Drive). When the processor reads various programs from the memory unit and executes them, the functions of the control unit are implemented as function units. For example, the control unit outputs, to the electric power converting unit, a PWM signal including the information about the operation amount (for example, the duty ratio) required for PWM (Pulse Width Modulation); and performs PWM control of the corresponding electric power converter. Meanwhile, the control unit can output the operation amount either directly to the electric power converting unit or via another function unit (for example, a loop control unit) (not illustrated).

The communication unit is configured using a communication module that communicates information in a wired manner or a wireless manner, and using a communication control unit that controls the operations of the communication module. The communication unit communicates information with a central control unit 110 (explained later) via a network NW configured using an Internet connection or a cellular phone line. For example, the communication unit receives a command from the central control unit 110 and outputs it to the control unit. Moreover, for example, the communication unit sends, to the central control unit 110, information related to the electric power status as input from the control unit. When the information related to the electric power status is in the form of the measurement values obtained by the sensor, the communication unit can send, for example, the measurement values input from the sensor to the central control unit 110.

Given below is the explanation of an example of the central control unit 110. The central control unit 110 includes a control unit, a memory unit, and a communication unit. Herein, the configuration of the control unit, the memory unit, and the communication unit can be identical to the configuration of the control unit, the memory unit, and the communication unit of an electric power converter.

When the control unit reads various programs from the memory unit and executes them, the functions of the control unit are implemented as function units.

The communication unit communicates information with the electric power converters and an external server 200 via the network NW.

The external server 200 is a server installed on the outside of the electric power system 1. For example, the external server 200 is an information processing device configured to function as an energy management system (EMS) in some other electric power system, or is an information processing device that includes databases and that functions as a data server for the central control unit 110. The external server 200 is used to store a variety of information that is likely to affect the operation of the electric power system 1.

In the electric power system 1, the bidirectional DC/DC converter 12 has the function of performing drooping control in which control is performed to ensure that such a reference function is followed which is a control target function having the drooping characteristic for generating the target value at the time of performing, what is called, local-control meant for controlling the stationary-type electric storage device 14 according to the voltage (V) measured in the bidirectional DC/DC converter 12. That is, the bidirectional DC/DC converter 12 has the function of performing control based on the reference function having the drooping characteristic. Such control is performed by the control unit of the bidirectional DC/DC converter 12.

The bidirectional DC/DC converter 12, which is connected to the stationary-type electric storage device 14, has the function of performing drooping control of the operations of the stationary-type electric storage device 14 in such a way that the relationship between the voltage (V) and the electric power (P) of the bidirectional DC/DC converter 12, that is, the relationship between the voltage (V) of the bidirectional DC/DC converter 12 and the electric power (P) charged into or discharged from the stationary-type electric storage device 14 has a predetermined drooping characteristic. Thus, the bidirectional DC/DC converter 12 has the function of performing control in a predetermined control cycle in such a way that the relationship between its voltage (V) and its electric power (P) maintains the reference function having a predetermined drooping characteristic. Meanwhile, the "drooping characteristic" indicates that the relationship between the voltage of the concerned converter and the input-output amount of the electric power of the concerned converter excludes the relationship in which the input-output amount of the electric power is constant over a predetermined range of voltage or excludes the relationship in which the voltage is constant over a predetermined range of the input-output amount of the electric power.

The reference function, which is provided in the bidirectional DC/DC converter 12 and which has the drooping characteristic for controlling the stationary-type electric storage device 14, has a constant-input-output region in which the target input-output of the stationary-type electric storage device 14 is maintained at a constant value over a predetermined voltage range.

As a specific example, as illustrated in FIG. 2, if the battery status of the stationary-type electric storage device 14 (herein, the charging rate of the stationary-type electric storage device 14) is set to a first charging rate recognized to be the steady state in which the charging rate is neither high nor low, then the constant-input-output region is provided in the reference function in such a way that charging and discharging of the stationary-type electric storage device 14 (i.e., electric power (P)=0) does not occur in the normal operation zone of the electric power network 10. That is, in the reference function, a region is provided in which, when the first charging rate is applied to the stationary-type electric storage device 14, the input-output of the electric power in the constant-input-output region is equal to "0". Thus, when the first charging rate is applied to the stationary-type electric storage device 14 and when the electric power network 10 is in the normal operation zone, the constant-input-output region of the reference function represents the dead zone regarding the input-output of the stationary-type electric storage device 14.

On the other hand, when the first charging rate is applied to the stationary-type electric storage device 14 and when the electric power network 10 is in the semi-normal operation zone in which the demand for the electric power is high, the bidirectional DC/DC converter 12 performs drooping control of the stationary-type electric storage device 14 in such a way that discharging is performed using the reference function in which the drooping characteristic is at the maximum level. Moreover, when the first charging rate is applied to the stationary-type electric storage device 14 and when the electric power network 10 is in the semi-normal operation zone in which the demand for the electric power is low, the bidirectional DC/DC converter 12 performs drooping control of the stationary-type electric storage device 14 in such a way that charging is performed using the reference function in which the drooping characteristic is at the maximum level.

Moreover, in the electric power system 1, each other electric power converter other than the bidirectional DC/DC converter 12 also has the function of controlling the operations of a device, which is connected to some other electric storage device, to ensure that such a reference function is followed which generates the target value at the time of performing local-control of the concerned device. Such control is performed by the control unit of the concerned electric power converter.

In the electric power system 1, the AC/DC converter 11, which converts the alternating-current power input from the commercial power system 100 of the alternating current type into the direct-current power and which outputs the direct-current power, has a function of performing primary control in which control is performed to ensure that the relationship between the voltage (V) and the electric power (P) of the AC/DC converter 11, that is, the relationship between the voltage (V) of the AC/DC converter 11 and the electric power (P) to be output to the DC bus 19 has a predetermined drooping function. That is, the AC/DC converter 11 has the function of performing drooping control of the input-output of the commercial power system 100 in such a way that, in a predetermined control cycle, the relationship between the voltage (V) of the AC/DC converter 11 and the electric power (P) to be output to the DC bus 19 follows the reference function having a predetermined drooping characteristic.

As a specific example, as illustrated in FIG. 2, the AC/DC converter 11 performs drooping control of the input of the commercial power system 100 using the reference function in which the drooping characteristic is at the maximum level in the normal operation zone; so that, during the normal operation of the electric power network 10, a stable supply of electric power can be achieved with a focus on the power supply from the commercial power system 100. On the other hand, when the electric power network 10 is in the semi-normal operation zone or the transient operation zone in which the demand for the electric power is low (i.e., with reference to FIG. 2, the semi-normal operation zone and the transient operation zone illustrated on the upper side having high values of the voltage (V)), the constant-input-output region (in FIG. 2, the vertical zone) is provided to ensure that the supply of the electric power from the commercial power system 100 is discontinued. Moreover, when the electric power network 10 is in the semi-normal operation zone or the transient operation zone in which the demand for the electric power is high (i.e., with reference to FIG. 2, the semi-normal operation zone and the transient operation zone illustrated on the lower side having low values of the voltage (V)), the constant-input-output region is provided to ensure that the supply of the electric power from the commercial power system 100 does not exceed the contracted power.

The first DC/DC converter 13, which converts the direct-current power input from the DC bus 19 into the charging voltage meant for charging the in-vehicle storage battery installed in the electric-powered vehicle (EV) 18 and which outputs the charging voltage, has a function of performing primary control in which control is performed to ensure that the relationship between the voltage (V) and the electric power (P) of the first DC/DC converter 13, that is, the relationship between the voltage (V) of the first DC/DC converter 13 and the electric power (P) input from the DC bus 19 constitutes a predetermined characteristic. That is, the first DC/DC converter 13 has the function of controlling the output of the EV battery charger 17 in such a way that, in a predetermined control cycle, the relationship between the voltage (V) of the first DC/DC converter 13 and the electric power (P) input from the DC bus 19 follows the reference function having a predetermined characteristic.

As a specific example, as illustrated in FIG. 2, the first DC/DC converter 13 that is connected to the EV battery charger 17 controls the output of the EV battery charger 17 in the case in which the electric power network 10 is in the transient operation zone in which the demand for the electric power is high; but does not control the output of the EV battery charger 17 in the case in which the electric power network 10 is either in the semi-normal operation zone in which the demand for the electric power is high, or in the normal operation zone, or in the semi-normal operation zone in which the demand for the electric power is low, or in the transient operation zone in which the demand for the electric power is low.

The second DC/DC converter 16, which is connected to the photovoltaic device (PV) 15, has a function of performing primary control in which control is performed to ensure that the relationship between the voltage (V) and the electric power (P) of the second DC/DC converter 16, that is, the relationship between the voltage (V) of the second DC/DC converter 16 and the electric power (P) to be output to the DC bus 19 constitutes a predetermined characteristic. That is, the second DC/DC converter 16 has the function of controlling the photovoltaic device (PV) 15 in such a way that, in a predetermined control cycle, the relationship between the voltage (V) of the second DC/DC converter 16 and the electric power (P) to be output to the DC bus 19 follows the reference function having a predetermined characteristic.

As a specific example, as illustrated in FIG. 2, the second DC/DC converter 16 that is connected to the photovoltaic device (PV) 15 controls the output of the photovoltaic device (PV) 15 in the case in which the electric power network 10 is in the transient operation zone in which the demand for the electric power is high; and performs maximum power point tracking control (MPPT) in the other operation zones.

Thus, according to the explanation given above, in the electric power system 1, the configuration is such that the reference function having a drooping characteristic is followed, so that the input-output amount of the electric power (P) of a device, such as the stationary-type electric storage device 14, is varied according to the variation in the voltage of the entire electric power system 1. Moreover, in the electric power system 1, each electric power element (i.e., each device, and the electric power converter connected to that device) performs the primary control in a dispersed manner based on its own voltage and its own electric power. That is, the drooping control represents the primary control that is performed by the control unit of each electric power converter based on the voltage of each device that is connected to the concerned electric power converter.

Moreover, in the electric power system 1, the bidirectional DC/DC converter 12 is configured in such a way that the reference function having the drooping characteristic and having the constant-input-output region is updated based on the variation in the battery status of the stationary-type electric storage device 14 (in the electric power system 1, the variation in the charging rate of the stationary-type electric storage device 14). That is, the reference function having the drooping characteristic and having the constant-input-output region is updated according to the variation in the charging rate of the stationary-type electric storage device 14. Meanwhile, the variation in the battery status of the stationary-type electric storage device 14 is measured using, for example, a known BMS (Battery Management System). A BMS is configured using, for example, a sensor, a microcomputer, and an input-output interface. The BMS is either installed on the outside of the stationary-type electric storage device 14 or inside the stationary-type electric storage device 14. Alternatively, the BMS can be installed in the bidirectional DC/DC converter 12. The BMS sends the information related to the measured battery status to the bidirectional DC/DC converter 12 via a communication line.

Since the reference function having the drooping characteristic and having the constant-input-output region is updated based on the variation in the charging rate of the stationary-type electric storage device 14, the charging rate of the stationary-type electric storage device 14 can be stably maintained at or above a predetermined level. Hence, the stationary-type electric storage device 14 can be assigned with an excellent adjustment force against a sudden fluctuation in the demand for electric power in the electric power network 10. Moreover, the reference function having the drooping characteristic is set in such a way that the input-output in the constant-input-output region becomes equal to zero at a predetermined value of the charging rate of the stationary-type electric storage device 14. As a result, it becomes possible to use the electric power mainly of the commercial power system 100 or the photovoltaic device (PV) 15 installed on the outside. That enables prevention of the charging-discharging loss in the stationary-type electric storage device 14, and enables achieving enhancement in the power efficiency of the electric power system 1.

For example, as illustrated in FIG. 3, in the electric power system 1, the reference function having the drooping characteristic for the stationary-type electric storage device 14 is updated according to secondary control. The secondary control that is meant for updating the reference function, which has the drooping characteristic, based on, for example, a command issued by the central control unit 110. Thus, the electric power system 1 also includes the central control unit 110 that controls electric power converters such as the bidirectional DC/DC converter 12.

In contrast, the drooping control meant for making the operations of the stationary-type electric storage device 14 follow the reference function having the drooping characteristic is performed based on the voltage of the stationary-type electric storage device 14, without involving a command from the central control unit 110.

Since the secondary control meant for updating the reference function having the drooping characteristic is performed based on a command issued by the central control unit 110, and since the drooping control is performed based on the voltage of the stationary-type electric storage device 14 without involving a command from the central control unit 110; the time-varying required electric power of the entire electric power network 10, which includes the stationary-type electric storage device 14, can be accurately reflected in the input-output control of the stationary-type electric storage device 14. Thus, the control of the entire electric power network 10, which includes the stationary-type electric storage device 14, gets optimized; and the required electric power can be efficiently supplied to the entire electric power network 10.

For example, when the electric power network 10 of the electric power system 1 is in the normal operation zone, the reference function having the drooping characteristic and controlled by the bidirectional DC/DC converter 12 is updated in such a way that, as illustrated in FIG. 4, when the charging rate of the stationary-type electric storage device 14 drops to be equal to or lower than a second charging rate (with reference to FIG. 4, for the purpose of illustration, the charging rate (SOC) of 30%) that is lower than a first charging rate (with reference to FIG. 4, for the purpose of illustration, the charging rate (SOC) of 50%), the constant-input-output region of the reference function shifts toward the input region in which the charging current is supplied to the stationary-type electric storage device 14 (with reference to FIG. 4, the region in which the electric power (P) of the stationary-type electric storage device 14 has a negative value). On the other hand, the reference function having the drooping characteristic is updated in such a way that, when the charging rate of the stationary-type electric storage device 14 increases to be equal to or higher than a third charging rate (with reference to FIG. 4, for the purpose of illustration, the charging rate (SOC) of 70%) that is higher than the first charging rate, the constant-input-output region of the reference function shifts toward the output region in which the stationary-type electric storage device 14 is discharged (with reference to FIG. 4, the region in which the electric power (P) of the stationary-type electric storage device 14 has a positive value). Meanwhile, as illustrated in FIG. 4, when the charging rate of the stationary-type electric storage device 14 is equal to the first charging rate, the control is performed to ensure that the input-output in the constant-input-output region becomes equal to "0".

According to the explanation given above, when the electric power network 10 of the electric power system 1 is in the normal operation zone, the reference function having the drooping characteristic is updated in such a way that, as illustrated in FIG. 4, when the charging rate of the stationary-type electric storage device 14 increases from the charging rate equal to or lower than the second charging rate (with reference to FIG. 4, for the purpose of illustration, from the charging rate (SOC) of 30%) to the first charging rate (with reference to FIG. 4, for the purpose of illustration, to the charging rate (SOC) of 50%), the constant-input-output region of the reference function shifts in the direction of zero input-output from the input region in which the charging current is supplied to the stationary-type electric storage device 14 (with reference to FIG. 4, the region in which the electric power (P) of the stationary-type electric storage device 14 has a negative value). On the other hand, the reference function having the drooping characteristic is updated in such a way that, when the charging rate of the stationary-type electric storage device 14 drops from the charging rate equal to or higher than the third charging rate (with reference to FIG. 4, for the purpose of illustration, from the charging rate (SOC) of 70%) to the first charging rate, the constant-input-output region of the reference function shifts in the direction of zero input-output from the output region in which the stationary-type electric storage device 14 is discharged (with reference to FIG. 4, the region in which the electric power (P) of the stationary-type electric storage device 14 has a positive value).

As explained above, as a result of updating the reference function having the drooping characteristic, the charging rate of the stationary-type electric storage device 14 can be stably maintained within a reasonable range. Hence, the stationary-type electric storage device 14 can be more reliably assigned with an excellent adjustment force against a sudden fluctuation in the demand for electric power in the electric power network 10.

For example, when the electric power network 10 of the electric power system 1 is in the normal operation zone, the reference function having the drooping characteristic is updated in such a way that, as illustrated in FIG. 4, when the charging rate of the stationary-type electric storage device 14 drops from the first charging rate to a predetermined charging rate exceeding the second charging rate (with reference to FIG. 4, for the purpose of illustration, to the charging rate (SOC) of 40%), the voltage value at the upper limit of a predetermined voltage range having the input-output to be equal to "0" within the constant-input-output region shifts toward the low-voltage side. On the other hand, the reference function having the drooping characteristic is updated in such a way that, when the charging rate of the stationary-type electric storage device 14 increases from the first charging rate to a predetermined charging rate lower than the third charging rate (with reference to FIG. 4, for the purpose of illustration, to the charging rate (SOC) of 60%), the voltage value at the lower limit of the predetermined voltage range having the input-output to be equal to "0" within the constant-input-output region shifts toward the high-voltage side.

According to the explanation given above, when the electric power network 10 of the electric power system 1 is in the normal operation zone, as illustrated in FIG. 4, as a result of an increase in the charging rate of the stationary-type electric storage device 14 from a predetermined charging rate exceeding the second charging rate (with reference to FIG. 4, for the purpose of illustration, from the charging rate (SOC) of 40%) to the first charging rate, the reference function having the drooping characteristic is updated in such a way that the voltage value at the upper limit of a predetermined voltage range having the input-output to be equal to "0" within the constant-input-output region shifts toward the high-voltage side. On the other hand, as a result of a drop in the charging rate of the stationary-type electric storage device 14 from a predetermined charging rate lower than the third charging rate (with reference to FIG. 4, for the purpose of illustration, from the charging rate (SOC) of 60%) to the first charging rate, the reference function having the drooping characteristic is updated in such a way that the voltage value at the lower limit of the predetermined voltage range having the input-output to be equal to "0" within the constant-input-output region shifts toward the low-voltage side.

As a result of updating the reference function having the drooping characteristic as explained above, the charging rate of the stationary-type electric storage device 14 can be maintained within a more reasonable range while making use of the electric power supplied from the commercial power system 100 installed on the outside. Hence, the charging efficiency of the electric power system 1 can be further enhanced while more reliably assigning the stationary-type electric storage device 14 with an excellent adjustment force against a sudden fluctuation in the demand for electric power in the electric power network 10.

With reference to FIG. 4, the reference function having the drooping characteristic is updated in such a way that, when the charging rate of the stationary-type electric storage device 14 drops from the first charging rate to a predetermined charging rate (with reference to FIG. 4, as an example, to the charging rate (SOC) of 40%) exceeding the second charging rate, the lower limit of the voltage value in a predetermined voltage range having the input-output to be equal to "0" within the constant-input-output region is not changed. Moreover, the reference function having the drooping characteristic is updated in such a way that, when the charging rate of the stationary-type electric storage device 14 increases from the first charging rate to a predetermined charging rate (with reference to FIG. 4, as an example, to the charging rate (SOC) of 60%) lower than the third charging rate, the upper limit of the voltage value in a predetermined voltage range having the input-output to be equal to "0" within the constant-input-output region is not changed.

As far as the specific numerical values of the first charging rate, the second charging rate, and the third charging rate of the stationary-type electric storage device 14 are concerned, as far as the determination of the charging rate of the stationary-type electric storage device 14 is concerned, and as far as the extent of a shift is concerned; the relevant operations can be performed in the central control unit 110.

Meanwhile, as illustrated in FIG. 3, in the electric power system 1, regarding the reference function for the primary control also provided in the AC/DC converter 11, the first DC/DC converter 13, and the second DC/DC converter 16 apart from the bidirectional DC/DC converter 12; the overall determination is performed during the secondary control, and the reference function for the primary control is optimally updated in each electric power converter such as the AC/DC converter 11, the first DC/DC converter 13, and the second DC/DC converter 16.

In order to update the reference function for the primary control provided in each electric power converter, including the bidirectional DC/DC converter 12; it is possible to use, for example, a computer that is equipped with AI (artificial intelligence).

In the electric power system 1, the central control unit 110 performs the secondary control of a plurality of electric power converters including the bidirectional DC/DC converter 12 (in the electric power system 1, the AC/DC converter 11, the bidirectional DC/DC converter 12, the first DC/DC converter 13, and the second DC/DC converter 16). The central control unit 110 is connected to each electric power converter, such as the AC/DC converter 11, the bidirectional DC/DC converter 12, the first DC/DC converter 13, and the second DC/DC converter 16, via a communication means. Thus, the secondary control performed by the central control unit 110 represents centralized control. The central control unit 110 is an EMS. In each electric power converter or in the central control unit 110, for example, a program causes the processor to perform the primary control and the secondary control.

For example, during the secondary control, if the communication of information between the central control unit 110 and the electric power converters is performed according to the TCP/IP protocol, then function information is included in the data portion of the IP packets of the command signal for function updating. The function information is about, for example, coordinate information of the boundary of the function representing the drooping characteristic (the drooping function), intercept information of the drooping function, information about the inclination (i.e., the drooping coefficient), and information about the shape (a straight line or a curved line). Moreover, information about the constant-input-output region is also included in the function information. Such information is defined in, for example, the P-V coordinates. In the data portion of the IP packets, the target information for updating from among the abovementioned information is included as data columns. The function information used in the updating is stored in the memory unit of the central control unit 110, and is read and used by the control unit.

In the electric power system 1, the primary control (the drooping control) in which the operations of the devices such as the stationary-type electric storage device 14 are made to follow the reference function has a different control cycle than the control cycle of the secondary control in which the reference function is updated. During the primary control, the operations of a device such as the stationary-type electric storage device 14 are implemented in such a way that the relationship between the voltage and the electric power of the concerned device follows a predetermined reference function. Hence, the control cycle of the primary control is, for example, equal to or smaller than one second. On the other hand, during the secondary control, the reference function is optimally updated based on the overall situation about the demand and the supply of the electric power in the entire electric power system 1. Hence, the control cycle of the secondary control is, for example, in the range of a few tens of minutes to a few hours. Thus, the control cycle of the secondary control is longer than the control cycle of the drooping control.

Explained below with reference to a sequence diagram illustrated in FIG. 5 is an exemplary control method implemented for performing centralized control of an electric power system.

Firstly, at Step S201, the central control unit 110 calls the timer provided therein and starts timekeeping. Then, at Step S202, the central control unit 110 requests each electric power converter for local-measurement information. The local-measurement information represents an example of the information related to the electric power status of the electric power system 1, and contains the measured values measured by the sensor of each electric power converter and contains the measurement timings.

Then, at Step S203, each electric power converter sends the local-measurement information to the central control unit 110. The central control unit 110 stores each set of local-measurement information in the memory unit.

Subsequently, at Step S204, the central control unit 110 requests the external server 200 for a variety of information that is likely to affect the operation of the electric power system 1 as an example of the information related to the electric power status of the electric power system 1. In the present example, the central control unit 110 requests the external server 200 for power generation amount/demand prediction information. The power generation amount/demand prediction information contains the prediction information about the power generation amount in the electric power system 1 and contains the prediction information about the demand for electric power; and can also contain, for example, the information about the season of the region in which the electric power system 1 is installed, the present weather, and the weather forecast. Moreover, if the external server 200 functions as the EMS of another electric power system, when the state of operation of that other electric power system is likely to affect the operation of the electric power system 1, the power generation amount/demand prediction information can also contain the prediction information about the power generation amount and the prediction information about the demand for electric power in the other electric power system.

Then, at Step S205, the external server 200 sends the power generation amount/demand prediction information to the central control unit 110. The central control unit 110 stores the power generation amount/demand prediction information in the memory unit.

Subsequently, at Step S206, the control unit of the central control unit 110 reads the received information, that is, reads the information related to the electric power status of the electric power system 1 from the memory unit; and accordingly performs operation optimization calculation for the electric power system 1.

The operation optimization calculation is performed to be applicable to various conditions. For example, the electric power system 1 is assumed to be controlled in such a way that the DC bus 19 has the operating point at a predetermined voltage. In that state, assume that, according to the power generation amount/demand prediction information, the weather forecast in the region in which the photovoltaic device 15 is installed indicates clear skies and the power generation amount of the photovoltaic device 15 is predicted to increase; and assume that, from the local-measurement information obtained from the second DC/DC converter 16 connected to the photovoltaic device 15, the central control unit 110 determines that the photovoltaic device 15 has leeway in regard to the supply of the electric power. In that case, the central control unit 110 determines to update the reference function of the bidirectional DC/DC converter 12, which is connected to the stationary-type electric storage device 14, in such a way that the stationary-type electric storage device 14 is charged at the abovementioned operating point. Moreover, at the same time of that updating, the central control unit 110 determines to update the reference function of the AC/DC converter 11 in such a way that no electric power is supplied from the commercial power system 100. Meanwhile, the reference function need not be updated, but can be switched instead.

Moreover, the operation optimization calculation can also be performed by setting conditions, such as putting the limit on the maximum power consumption or utilizing the night-time electricity, from the perspective of ensuring that the contracted power of the commercial power system 100 is not exceeded or from the perspective of having appropriate electricity costs.

The memory unit of the central control unit 110 can be used to store an already-learnt model, and the central control unit 110 can perform the operation optimization calculation using the already-learnt model. As the already-learnt model, for example, it is possible to use an already-learnt model that is generated by performing deep learning using a neural network and using teacher data represented by the information related to the electric power status of the electric power system 1 and the corresponding result of switching or updating of the reference function with respect to each electric power converter.

Subsequently, at Step S207, the central control unit 110 outputs an updating command, which is meant for updating the reference function, to the electric power converters to be updated from among all electric power converters; and implements the updating step. Then, at Step S208, the central control unit 110 resets the timer. Subsequently, at Step S209, each electric power converter performs the local-control. The local-control has the electric power status of the electric power system 1 reflected therein, and all electric power converters are subjected to coordinated control.

Given below is the explanation of other embodiments of the electric power converter and the electric power system according to the present invention. In the electric power converter and the electric power system according to the embodiment described above, the reference function having the drooping characteristic is configured to vary the input-output amount of the electric power of the concerned device according to the variation in the voltage of the concerned device. Alternatively, the reference function having the drooping characteristic can be configured to vary the input-output amount of the electric current of the concerned device according to the variation in the voltage of the concerned device.

Moreover, as a method for making the relationship between the voltage and the electric power of the concerned device follow the reference function; for example, an electric power converter can measure its voltage and set the target electric power from the reference function, and can make the electric power follow the target electric power. Alternatively, an electric power converter can measure its electric power and set the target voltage from the reference function, and can make the voltage follow the target voltage.

In the electric power system according to the embodiment described above, apart from the bidirectional DC/DC converter connected to the stationary-type electric storage device, each other electric power converter too controls the operations of a device, which is connected thereto, in such a way that the reference function meant for generating the target value at the time of performing the local-control of the connected device according to the voltage measured by the other electric power converter. However, other than the bidirectional DC/DC converter connected to the stationary-type electric storage device, the control performed by the other electric power converters need not be based on the reference function.

Moreover, in the electric power system according to the embodiment described above, the central control unit is separately installed that performs the secondary control in a centralized manner. Alternatively, the configuration can be such that at least one of a plurality of electric power converters can be equipped to function as the central control unit that controls a plurality of electric power converters.

Furthermore, in the electric power system according to the embodiment described above, the reference function is updated based on the variation in the charging rate representing the battery status. Alternatively, the reference function can be updated based on the variation in the deterioration status or based on the variation in the C rating.

### Industrial Applicability

The electric power converter and the electric power system according to the present invention enable assigning an excellent adjustment force against a sudden fluctuation in the demand for electric power and to assign excellent power efficiency. Hence, the electric power converter and the electric power system according to the present invention are of vital use in the field of DC grids having electric power networks in which the locally produced electric power is locally consumed.

### Reference Signs List

- 1: electric power system
- 10: electric power network
- 11: AC/DC converter
- 12: bidirectional DC/DC converter
- 13: first DC/DC converter
- 14: stationary-type electric storage device
- 15: photovoltaic device
- 16: second DC/DC converter
- 17: EV battery charger
- 19: DC bus
- 100: commercial power system
- 110: central control unit

## Claims

1. An electric power converter for being electrically connected to an electric storage device, wherein
the electric power converter is configured to refer to, according to voltage measured by the electric power converter, a reference function as output target for the electric storage device, the reference function having drooping characteristic and representing a control target function,
the reference function has a constant-input-output region over a predetermined voltage range, and
the reference function is updated based on battery status of the electric storage device.

2. The electric power converter according to claim 1, wherein
the electric storage device is a stationary-type electric storage device,
a control unit of the electric power converter is configured to perform control based on the reference function for generating target value at time of performing local-control of the stationary-type electric storage device according to the voltage measured by the electric power converter,
the reference function has a constant-input-output region in which input-output of the stationary-type electric storage device is maintained at a constant value over a predetermined voltage range, and
the reference function having the constant-input-output region is updated based on battery status of the stationary-type electric storage device.

3. The electric power converter according to claim 1 or 2, wherein change in battery status of the electric storage device represents change in charging rate, or change in deterioration state, or change in C rating.

4. The electric storage device according to claim 3, wherein input-output in the constant-input-output region is equal to 0 when charging rate of the electric storage device is a first charging rate,.

5. The electric power converter according to claim 4, wherein the reference function having drooping characteristic is updated such that
when charging rate of the electric storage device drops to be equal to or lower than a second charging rate that is lower than the first charging rate, the constant-input-output region shifts toward input region in which charging current is supplied to the electric storage device, and
when charging rate of the electric storage device increases to be equal to or higher than a third charging rate that is higher than the first charging rate, the constant-input-output region shifts toward output region in which the electric storage device is discharged.

6. The electric power converter according to claim 5, wherein the reference function having drooping characteristic is updated such that
when charging rate of the electric storage device increases from the first charging rate to a predetermined charging rate exceeding the second charging rate, voltage value of upper limit of the predetermined voltage range over which input-output within the constant-input-output region is equal to 0 shifts toward low-voltage side, and
when charging rate of the electric storage device drops from the first charging rate to a predetermined charging rate lower than the third charging rate, voltage value of lower limit of the predetermined voltage range over which input-output within the constant-input-output region is equal to 0 shifts toward high-voltage side.

7. The electric power converter according to claim 6, wherein the reference function having drooping characteristic is updated such that
when charging rate of the electric storage device drops from the first charging rate to a predetermined charging rate exceeding the second charging rate, voltage value of lower limit of the predetermined voltage range over which input-output within the constant-input-output region is equal to 0 is not changed, and
when charging rate of the electric storage device increases from the first charging rate to a predetermined charging rate lower than the third charging rate, voltage value of upper limit of the predetermined voltage range over which input-output within the constant-input-output region is equal to 0 is not changed.

8. The electric power converter according to any one of claims 1 to 7, wherein secondary control, which is meant for updating a reference function having drooping characteristic, is performed based on a command issued by a central control unit.

9. The electric power converter according to claim 8, wherein a control unit of the electric power converter performs control, which is based on the reference function, based on local voltage of the electric storage device and without involving a command from the central control unit.

10. The electric power converter according to claim 8 or 9, wherein control cycle of the secondary control is longer than control cycle of control that is based on the reference function.

11. The electric power converter according to any one of claims 1 to 10, wherein the reference function having drooping characteristic is configured to vary input-output amount of electric power or electric current according to variation in voltage.

12. The electric power converter according to any one of claims 1 to 11, wherein the electric power converter is a DC/DC converter.

13. An electric power system comprising
an electric power element including:
an electric power converter; and
a stationary-type electric storage device electrically connected to the electric power converter, wherein
the electric power converter is configured to refer to, according to voltage measured by the electric power converter, a reference function as output target for the electric storage device, the reference function having drooping characteristic and representing a control target function,
the reference function has a constant-input-output region over a predetermined voltage range, and
the reference function is updated based on battery status of the electric storage device.

14. The electric power system according to claim 13, wherein
the electric storage device is a stationary-type electric storage device,
the electric power converter includes a control unit configured to perform control based on the reference function for generating target value at time of performing local-control of the stationary-type electric storage device according to the voltage measured by the electric power converter,
the reference function has a constant-input-output region in which input-output of the stationary-type electric storage device is maintained at a constant value over a predetermined voltage range, and
the reference function having the constant-input-output region is updated based on battery status of the stationary-type electric storage device.

15. The electric power system according to claim 13 or 14, wherein change in battery status of the electric storage device represents change in charging rate, or change in deterioration state, or change in C rating.

16. The electric power system according to claim 15, wherein input-output in the constant-input-output region is equal to 0 when charging rate of the electric storage device is a first charging rate.

17. The electric power system according to claim 16, wherein the reference function having drooping characteristic is updated such that
when charging rate of the electric storage device drops to be equal to or lower than a second charging rate that is lower than the first charging rate, the constant-input-output region shifts toward input region in which charging current is supplied to the electric storage device, and
when charging rate of the electric storage device increases to be equal to or higher than a third charging rate that is higher than the first charging rate, the constant-input-output region shifts toward output region in which the electric storage device is discharged.

18. The electric power system according to claim 17, wherein the reference function having drooping characteristic is updated such that
when charging rate of the electric storage device increases from the first charging rate to a predetermined charging rate exceeding the second charging rate, voltage value of upper limit of the predetermined voltage range over which input-output within the constant-input-output region is equal to 0 shifts toward low-voltage side, and
when charging rate of the electric storage device drops from the first charging rate to a predetermined charging rate lower than the third charging rate, voltage value of lower limit of the predetermined voltage range over which input-output within the constant-input-output region is equal to 0 shifts toward high-voltage side.

19. The electric power system according to claim 18, wherein the reference function having drooping characteristic is updated such that
when charging rate of the electric storage device drops from the first charging rate to a predetermined charging rate exceeding the second charging rate, voltage value of lower limit of the predetermined voltage range over which input-output within the constant-input-output region is equal to 0 is not changed, and
when charging rate of the electric storage device increases from the first charging rate to a predetermined charging rate lower than the third charging rate, voltage value of upper limit of the predetermined voltage range over which input-output within the constant-input-output region is equal to 0 is not changed.

20. The electric power system according to any one of claims 13 to 19, further comprising a central control unit that controls the electric power converter, wherein
secondary control, which is meant for updating a reference function having drooping characteristic, is performed based on a command issued by the central control unit.

21. The electric power system according to claim 20, wherein the control unit performs control, which is based on the reference function, based on local voltage of the electric storage device and without involving a command from the central control unit.

22. The electric power system according to claim 20 or 21, wherein control cycle of the secondary control is longer than control cycle of control that is based on the reference function.

23. The electric power system according to any one of claims 13 to 22, wherein the reference function having drooping characteristic is configured to vary input-output amount of electric power or electric current according to variation in voltage.

24. The electric power system according to any one of claims 13 to 23, wherein line to which the electric power element is electrically connected is a DC bus.

25. A control method for an electric power converter electrically connected to an electric storage device, the control method comprising:
a step of referring to, according to voltage measured by the electric power converter, a reference function as output target for the electric storage device by the electric power converter, the reference function having drooping characteristic and representing a control target function;
a step of updating the reference function based on battery status of the electric storage device, wherein
the reference function has a constant-input-output region over a predetermined voltage range.

26. A control method for an electric power system that includes an electric power element including an electric power converter, and a stationary-type electric storage device for being electrically connected to the electric power converter, the control method comprising:
a step of referring to, according to voltage measured by the electric power converter, a reference function as output target for the electric storage device by the electric power converter, the reference function having drooping characteristic and representing a control target function;
a step of updating the reference function based on battery status of the electric storage device, wherein
the reference function has a constant-input-output region over a predetermined voltage range.

27. A control method for an electric power system including: an electric power element including an electric power converter, and a stationary-type electric storage device electrically connected to the electric power converter; and a central control device configured to communicate with the electric power converter and with an external server holding demand information about electric power, the control method comprising:
a step of referring to, according to voltage measured by the electric power converter, a reference function as output target for the electric storage device by the electric power converter, the reference function having drooping characteristic and representing a control target function;
a step of obtaining the demand information from the external server; and
a step of updating the reference function based on battery status of the electric storage device, wherein
the reference function has a constant-input-output region over a predetermined voltage range.

28. A program that causes a processor to execute a control method for an electric power converter electrically connected to an electric storage device, the program instructing the processor to:
refer to a reference function having drooping characteristic and representing a control target function;
update the reference function based on battery status of the electric storage device, wherein
the reference function has a constant-input-output region over a predetermined voltage range.

29. A program that causes a processor to execute a control method for an electric power system including an electric power element including an electric power converter, and a stationary-type electric storage device electrically connected to the electric power converter, the program instructing the processor to execute:
refer to, according to voltage measured by the electric power converter, a reference function as output target for the electric storage device by the electric power converter, the reference function having drooping characteristic and representing a control target function;
update the reference function based on battery status of the electric storage device, wherein
the reference function has a constant-input-output region over a predetermined voltage range.
